(19) Europäisches Patentamt
European Patent Office
Office européen des brevets

(11) **EP 1 334 009 B1**

(12) **EUROPÄISCHE PATENTSCHRIFT**

(45) Veröffentlichungstag und Bekanntmachung des Hinweises auf die Patenterteilung:
**02.05.2007 Patentblatt 2007/18**

(21) Anmeldenummer: **00983072.0**

(22) Anmeldetag: **14.11.2000**

(51) Int Cl.:
**B60R 21/01** (2006.01)

(86) Internationale Anmeldenummer:
**PCT/DE2000/003995**

(87) Internationale Veröffentlichungsnummer:
**WO 2002/040320 (23.05.2002 Gazette 2002/21)**

(54) **VERFAHREN UND SYSTEM ZUM BESTIMMEN DER BELEGUNG DES INNENRAUMS EINES FAHRZEUGS**

METHOD AND DEVICE FOR DETERMINING WHETHER THE INTERIOR OF A VEHICLE IS OCCUPIED

PROCEDE ET SYSTEME POUR DETERMINER L'OCCUPATION DE L'HABITACLE D'UN VEHICULE

(84) Benannte Vertragsstaaten:
**DE FR GB IT**

(43) Veröffentlichungstag der Anmeldung:
**13.08.2003 Patentblatt 2003/33**

(73) Patentinhaber: **SIEMENS AKTIENGESELLSCHAFT
80333 München (DE)**

(72) Erfinder:
• **ERTL, Ludwig
93057 Regensburg (DE)**
• **KOEHLER, Thorsten
93180 Deuerling (DE)**

• **ZITTLAU, Dirk
92348 Stoeckelsberg (DE)**

(56) Entgegenhaltungen:
DE-A- 19 757 595          US-A- 5 737 083
US-A- 5 983 147

• JOACHIM KOLLING: "Validierung und Weiterentwicklung eines CAD-Menschmodells für die Fahrzeuggestaltung" 1997, HOCHSCHULSCHRIFT: MÜNCHEN TECHNISCHE UNIVERSITÄT, DISSERTATION , MÜNCHEN * das ganze Dokument *

EP 1 334 009 B1

**Beschreibung**

Die Erfindung betrifft ein Verfahren und ein System zum Bestimmen der Belegung des Innenraums eines Fahrzeugs.

Moderne Fahrzeuge sind mit Insassenschutzeinrichtungen, wie Airbags, Gurtstrammern, mit Spracheingabesystemen und anderen Systemen ausgerüstet, für deren optimale Funktion die genaue Kenntnis der Position von Fahrzeuginsassen oder sonstiger im Innenraum befindlicher Objekte vorteilhaft ist. Beispielsweise ist es zweckmäßig, den Aufblaszeitpunkt und/oder die Aufblasstärke eines Airbags auf die Position und gegebenenfalls die Größe eines zu schützenden Fahrzeuginsassen abzustimmen. Wenn auf dem Beifahrersitz sich beispielsweise ein Kindersitz befindet, ist es zweckmäßig, den Beifahrerairbag im Falle eines Unfalls gar nicht auszulösen. Bei Spracheingabesystemen ist es vorteilhaft, die Position eines sprechenden Fahrzeuginsassen zu kennen, da das System vorteilhaft so ausgelegt ist, daß es auf bestimmte Sprachbefehle, wenn diese nicht vom Fahrer gesprochen werden, nicht reagiert.

Aus US-A- 5 983 147 ist eine Einrichtung bekannt, welche die Fahrzeugbelegung anhand eines Vergleichs zwischen abgespeicherten Daten und aktuellen Daten in einem auf die Kamera bezogenen Koordinatensystem ermittelt.

Aus US 5,737,083 ist ein optisches Sensorsystem zur Vermessung des dreidimensionalen Profils und Position eines Objekts bekannt. Dazu wird das Objekt mittels sequentiell angeschalteter LED's beleuchtet und so eine Gruppe von Bildpunkten des Objekts hergestellt. Dabei werden folgende Schritte durchgeführt:

- Aufnehmen eines dreidimensionalen Oberflächenbildes eines Bereiches des Fahrzeuginnenraums mit Hilfe einer Aufnahmeeinrichtung,
- Erzeugen von Aufnahmebilddaten, die Bildpunkten des Oberflächenbildes entsprechende Objektpunkte in einem Aufnahmekoordinatensystem der Aufnahmeeinrichtung darstellen, und
- Vergleichen der Aufnahmebilddaten mit abgespeicherten Profilen zur Bestimmung der Belegung eines Sitzes ein Innenraum eines Fahrzeugs.

Aus DE 197 57 595 ist ein Verfahren und eine Vorrichtung zur Aufnahme eines dreidimensionalen Abstandsbildes bekannt, wozu gleichzeitig ein Grauwert und ein Intensitätsbild erzeugt wird.

Aus der Doktorarbeit "Validierung und Weiterentwicklung eines CAD Menschenmodells für die Fahrzeuggestaltung" von Joachim Kolling ist es bekannt, eine aufgrund von Versuchspersonendaten wahrscheinliche Position eines Insassen zu generieren.

Der Erfindung liegt die Aufgabe zugrunde, ein Verfahren und ein System zu schaffen, mit dem die Fahrzeugbelegung sicher erkennbar und in einfacher Weise auswertbar ist.

Der das Verfahren betreffende Teil der Erfindungsaufgabe wird mit den Merkmalen des Anspruchs 1 gelöst.

Bei dem erfindungsgemäßen Verfahren werden insbesondere zunächst auf die Aufnahmeeinrichtung bezogene Aufnahmebilddaten erzeugt, die beispielsweise die Position von den Bildpunkten entsprechenden Objektpunkten beispielsweise bezüglich ihres Abstandes von einer Kamera und ihrer Richtung im Raum angeben. Diese Aufnahmebilddaten werden in Fahrzeugbilddaten umgewandelt, die die den Bildpunkten entsprechenden Objektpunkte unmittelbar in einem fahrzeugfesten Koordinatensystem beschreiben. In dem fahrzeugfesten Koordinatensystem können die Bildpunkte unmittelbar daraufhin ausgewertet werden, ob vorbestimmte Bedingungen vorhanden sind, die für das Auslösen eines Airbags, die Aktivierung von Sprachbefehlen usw., maßgeblich sind. Diese Belegungsbedingungen des Innenraums, Ort und/oder Größe des Kopfes einer Person, Belegung oder Nichtbelegung eines Sitzes, Vorhandensein eines Kindersitzes usw., sind in Daten abgelegt, die auf den Fahrzeuginnenraum bezogen sind, d.h. auf ein fahrzeugfestes Koordinatensystem.

Damit läßt sich eine vom Abstand eines jeweiligen Objektes von der Kamera, d.h. von der Position der Aufnahmeeinrichtung innerhalb des Innenraums, unabhängige Belegungsauswertung vornehmen.

Die Unteransprüche 2 bis 4 sind auf vorteilhafte Ausführungsformen und Weiterbildungen des erfindungsgemäßen Verfahrens gerichtet.

Der Anspruch 5 ist auf den grundsätzlichen Aufbau eines Systems zur Lösung der Erfindungsaufgabe gerichtet.

Das System ist besonders vorteilhaft in einer Fahrzeuginsassenschutzeinrichtung einsetzbar.

Die Erfindung wird im folgenden anhand schematischer Zeichnungen beispielsweise und mit weiteren Einzelheiten erläutert.

Es stellen dar:

Fig. 1     ein Blockschaltbild eines erfindungsgemäßen Systems,

Fig. 2     verschiedene Koordinatensysteme zur Erläuterung der Datenumwandlungen und

Fig. 3     ein Schema zur Erläuterung, wie eine vom Abstand eines Gegenstandes von einer Kamera unabhängige Bildauswertung ermöglicht wird.

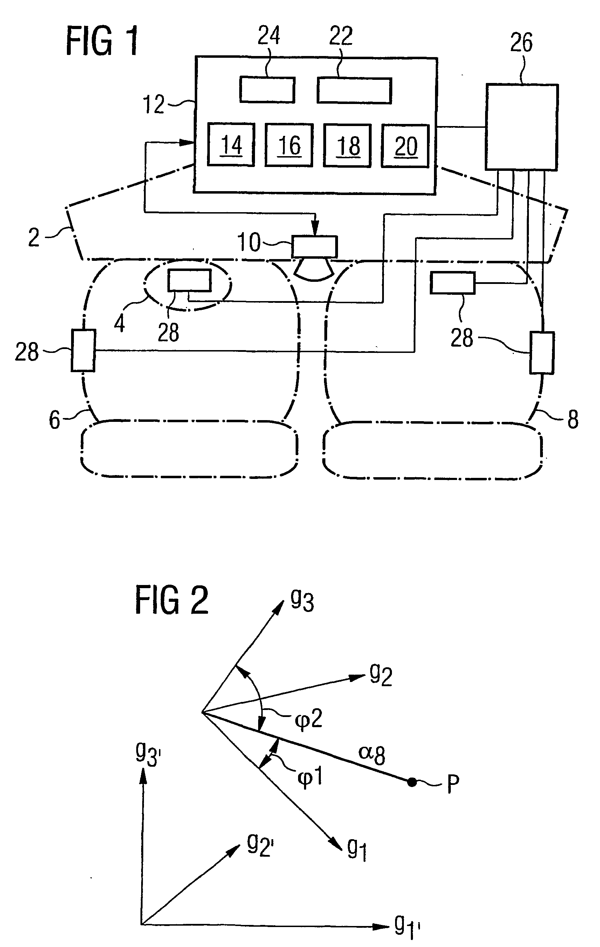

Gemäß Fig. 1 ist im Innenraum eines Fahrzeugs, dessen Windschutzscheibe 2, dessen Lenkrad 4, dessen Fahrersitz 6 und dessen Beifahrersitz 8 gestrichelt angedeutet sind, im Bereich über der Windschutzscheibe eine Aufnahmeeinrichtung 10 angeordnet, mit der ein dreidimensionales Oberflächenbild des Fahrzeuginnenraums im Bereich des Fahrersitzes und des Beifahrersitzes aufnehmbar ist.

Die Aufnahmeeinrichtung kann in an sich bekannter Weise unterschiedlichsten Aufbau haben und beispielsweise eine 3D-Kamera sein, die als Stereokamera oder beispielsweise als Triangulationskamera mittels Lichtbüschelverfahren oder sonstwie arbeitet. Eine ausführliche Beschreibung von 3D-Aufnahmeverfahren ist in dem Buch von Xiaoyi Jiang, Horst Bunke; Dreidimensionales Computersehen; Gewinnung und Analyse von Tiefenbildern, Springer Berlin, 1997, gegeben. Es können mehrere Kameras vorhanden sein, die dem Fahrerraum und dem Beifahrerraum zugeordnet sind. Die Kamera kann mittels eines Schrittschaltmotors verschwenkbar sein.

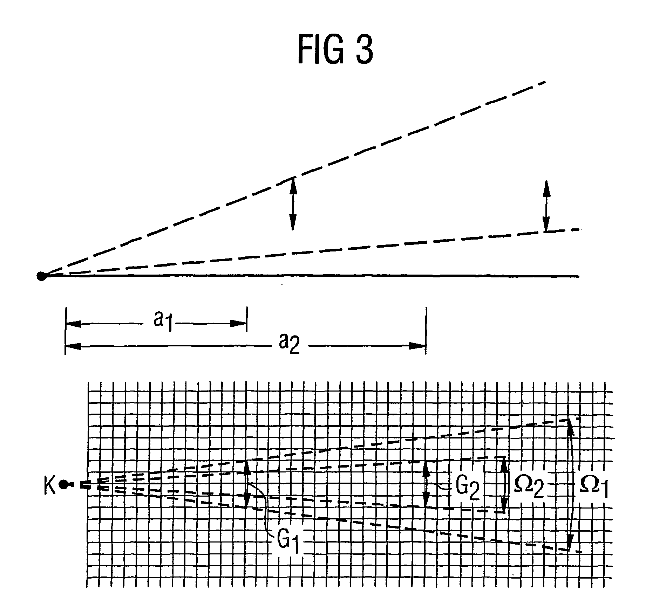

Die Aufnahmeeinrichtung 10 ist an ein Steuergerät 12 angeschlossen, das eine Aufnahmebilddatenerzeugungseinheit 14, eine Umwandlungseinheit 16, eine Voxeleinheit 18, eine Auswerteeinheit 20, einen Mikroprozessor 22 und Speichereinrichtungen 24 enthält. Die Einheiten 14, 16, 18 und 20 sind im wesentlichen Funktionsblöcke, die je nach Systemaufbau in Form von Hardware-Komponenten und/oder von Software vorhanden sind. Das Steuergerät 12 ist mit einer Steuereinheit 26 verbunden, die den Betrieb von Insassenschutzmitteln 28 steuert. Im folgenden wird die Funktion des Systems der Fig. 1 anhand der Fig. 2 und 3 erläutert.

Bei mit einer Datenverarbeitungsanlage auswertbaren 3-dimensionalen Oberflächenbildern sind die Verbindungslinien von den beiden Sensoren (Stereoverfahren) oder einem Sensor und einer Laserlichtquelle (Lichtbüschelverfahren) zu einem Oberflächenpunkt des Objekts bekannt. Nach Berechnung der Abstände a ist somit im System der Bildsensoren (bei Stereoverfahren wird einer der Bildsensoren ausgewählt) eine Menge von Geraden bzw. Vektoren, die den Sensormittelpunkt mit den O-berflächenpunkten des Objekts verbinden, vorhanden. Sei angenommen, daß die Aufnahmebilddatenerzeugungseinheit 14 in an sich bekannter Weise aus den von der Aufnahmeeinrichtung 10 aufgenommenen Daten ein dreidimensionales Oberflächenbild des jeweiligen Bereiches des Innenraums erzeugt, in dem jedem Oberflächenpunkt P eines Objektes seine Koordinaten x,y,z (Fig. 2) in einem bezüglich der Aufnahmeeinrichtung 10 fest liegenden, rechtwinkeligen, kartesischen Koordinatensystem zugeordnet sind. Die Achsen $g_1$, $g_2$, $g_3$ dieses Koordinatensystems sind beispielsweise gegeben durch:

- $g_1$ optische Achse des Objektivs,
- $g_2$ eine Gerade, senkrecht zur optischen Achse $g_1$ in einer beispielsweise senkrechten Ebene und
- $g_3$ eine Gerade, senkrecht zu $g_1$ und $g_2$.

Der Ursprung O dieses Koordinatensystems befindet sich beispielsweise in der Abbildungsebene des Objektivs.

Die in der Aufnahmeeinrichtung 10 oder, bei entsprechendem Aufbau, erst in der Aufnahmebilddatenerzeugungseinheit 14 des Steuergeräts 12 erzeugten Aufnahmebilddaten $x_n$, $y_n$, $z_n$ werden in der Umwandlungseinheit 16 in kartesische Koordinaten eines rechtwinkligen, kartesischen Koordinatensystems $g_{1'}$, $g_{2'}$, $g_{3'}$ umgewandelt, das fahrzeugfest ist, wobei $g_1'$ beispielsweise die Fahrzeuglängsrichtung, $g_2'$ die Fahrzeugbreitenrichtung und $g_3'$ die Höhenrichtung bedeuten und der Ursprung O' ein fester Bezugspunkt, beispielsweise im Bereich der Mitte des Fahrzeugbodens ist.

In der Speichereinrichtung 24 ist die Lage des aufnahmeeinrichtungsfesten Koordinatensystems $g_1$, $g_2$ und $g_3$ relativ zu dem fahrzeugfesten Koordinatensystem gespeichert, so dass die Umwandlungsmatrix bekannt ist, mit der das aufnahmeeinrichtungsfeste Koordinatensystem in das fahrzeugfeste Koordinatensystem überführt werden kann.

Für die Umwandlung zweier kartesischer Koordinatensysteme ineinander gelten folgende allgemeine Beziehungen:

Sei angenommen, daß ein erstes kartesisches Koordinatensystem mit dem Ursprung O und den Achsen $g_1$, $g_2$ und $g_3$ in ein zweites kartesisches Koordinatensystem mit dem Ursprung O' und den Achsen $g_1'$, $g_2'$ und $g'$, dadurch überführt wird, daß es um einen Winkel δ um eine Achse g gedreht wird, deren Richtungskosinus mit den Koordinatenachsen gegeben ist durch $\cos(g_1, g) = \alpha$, $\cos(g_2, g) = \beta$ und $\cos(g_3, g) = \gamma$ hat, dann gilt für die Umrechnung der Koordinaten folgende Beziehung:

$$x' = x(\cos\delta + \alpha^2(1-\cos\delta)) + y(\gamma\ \sin\delta + \alpha\beta(1-\cos\delta)) + z(-\beta\sin\delta + \alpha\gamma(1-\cos\delta)),$$

$$y' = x(-\gamma\ \sin\delta + \beta\alpha(1-\cos\delta)) + y(\cos\delta + \beta^2(1-\cos\delta)) + z(\alpha\sin\delta + \beta\gamma(1-\cos\delta)),$$

$$z' = x(\beta\sin\delta + \gamma\alpha(1-\cos\delta)) + y(-\alpha\sin\delta + \gamma\beta(1-\cos\delta)) + z(\cos\delta+\gamma^2(1-\cos\delta))$$

Wenn die Ursprünge beider Koordinatensysteme O,O' auseinanderliegen, müssen die Koordinaten x', y' und z' entsprechend dem Vektor, der die Ursprünge verbindet, noch linear transformiert werden.

Da in der Speichereinheit 24 α, β und γ sowie der Drehwinkel δ gespeichert sind und der Verbindungsvektor der Ursprünge der beiden Koordinatensysteme ebenfalls gespeichert ist, können die Koordinaten der einzelnen Gegenstandspunkte bzw. der ihnen entsprechenden Bildpunkte in dem fahrzeugfesten Koordinatensystem als Fahrzeugbilddaten errechnet und gespeichert werden.

Ein Problem, das sich bei einer Auswertung der so ermittelten Fahrzeugbilddaten stellt, ist folgendes:

Wie aus Fig. 3 ersichtlich, ist der Raumwinkel Ω, in dem eine Kamera K einen Gegenstand G sieht, von dessen Abstand a abhängig. Je größer der Abstand, je kleiner ist der Raumwinkel. Da jeder Raumwinkeleinheit auf einem in der elektronischen Kamera enthaltenen Feld mit Matrix angeordnetem Lichtsensoren eine konstante Anzahl von Lichtsensoren entspricht, ergeben sich bei gleicher Objektgröße umso weniger Bilddaten je weiter das Objekt von der Kamera entfernt ist. Dies kann bei der Auswertung der Bilddaten, beispielsweise der Klassifizierung von Objekten, zu Schwierigkeiten führen, da an sich gleichen Objekten bei unterschiedlicher Entfernung von der Kamera unterschiedliche Bilddatenmengen entsprechen.

Genauer ergibt sich in dem fahrzeugfesten Koordinatensystem eine einem Objekt entsprechende Punktwolke, deren Größe zwar bei sich änderndem Abstand von der Kamera gleich bleibt, deren Punktdichte jedoch mit zunehmendem Abstand von der Kamera abnimmt. Um diesen mit den tatsächlichen Verhältnissen im Innenraum nicht übereinstimmenden Effekt zu vermindern, wird der erfasste Innenraumbereich in bevorzugt gleich große Volumenelemente aufgeteilt (in Fig. 3 zweidimensional als Gitter eingetragen), wobei jedem Volumenelement die Koordinaten beispielsweise seines Mittelpunktes zugeordnet sind. Diese Aufteilung des Innenraums, d.h. die Koordinaten der einzelnen Volumenelemente und deren Volumina sind beispielsweise in der Speichereinrichtung 24 gespeichert. Dabei bildet jedes Volumenelement ein "Voxel" (Volume Picture Element). Die Kanten der Voxel sind bevorzugterweise parallel zu den Koordinatenachsen. Die Voxel sind unmittelbar aneinanderliegend und nicht überlappend. Ihre Kantenlänge orientiert sich an der typischen räumlichen Auflösung der Kamera. Die in der Umwandlungseinheit 16 erzeugten Fahrzeugbilddaten, die jeden Gegenstandspunkt einen Bildpunkt in Form eines Vektors im fahrzeugfesten Koordinatensystem zuordnen, werden in der Voxeleinheit 18 in Voxeldaten umgewandelt, indem jedem Volumenelement bzw. Voxel, in dem ein Objektpunkt liegt, ein vorbestimmter Datenwert, beispielsweise eine 1 zugeordnet wird, die das Voxel als mit einem Objektpunkt belegt bezeichnet. Das so erhaltene dreidimensionale Voxelbild kennzeichnet ein Objekt unabhängig von seiner Entfernung von der Kamera, so dass objektivierte Datenauswertungen möglich sind, in denen Objekte beispielsweise anhand ihrer Formen klassifiziert werden können.

In der Auswerteeinheit 20 wird das in der Voxeleinheit 18 erzeugte Voxelbild ausgewertet, beispielsweise durch an sich bekannte Mustererkennungsverfahren, so dass Art und Raum in erfasstem Innenraum vorhandener Objekte, wie der Kopf einer Person, ein Kindersitz usw. sicher erkannt werden und nach Korrelation mit in der Speichereinheit 24 abgelegten vorbestimmten Bedingungen (Vorhandensein eines Kindersitzes, Abstand des Kopfes einer Person vom Lenkrad usw.) Steuersignale für die Steuereinheit 26 erzeugt werden. Auf diese Weise ist es möglich, ein oder mehrere Insassenschutzmittel 28, wie Airbags, Gurtstraffer usw. zweckentsprechend für einen optimalen Insassenschutz auszulösen und zu betätigen.

Das beschriebene System bzw. Auswerteverfahren kann in vielfältiger Weise ergänzt werden. Beispielsweise können in der Speichereinrichtung 24 vorbestimmte Fahrzeugpunkte gespeichert werden. Wenn diese vorbestimmten Punkte, deren Positionen im fahrzeugfesten Koordinatensystem bekannt ist, in dem Bild erkannt werden, kann aus den Koordinaten dieser vorbestimmten Punkte die Transformationsmatrix ermittelt werden. Weiter können diese vorbestimmten Punkte für Eichzwecke oder für Optimierungszwecke verwendet werden, wobei bei Abweichungen zwischen den gespeicherten Gegenstandspunkten und den transformierten Gegenstandspunkten die Transformationsmatrix nach der Methode der kleinsten Fehlerquadrate optimiert werden kann, indem die Summe der Abweichungsquadrate minimiert wird.

Das aufnahmeeinrichtungsfeste und das fahrzeugfeste Koordinatensystem müssen nicht notwendigerweise kartesische Koordinatensysteme sein; bei oder eines von beiden kann ein Polarkoordinatensystem oder ein anderes, für die jeweiligen Zwecke geeignetes dreidimensionales Koordinatensystem sein.

Die "Voxelverarbeitung" kann derart erfolgen, dass jedes Voxelelement nur einmal gezählt wird, beispielsweise angeschaltet wird, wenn ein Objektpunkt in ihm liegt, oder ihm ein Wert zugeordnet wird, der jedes Mal um eine Einheit erhöht wird, wenn ein Objektpunkt in dem Voxelelement liegt. Im ersten Fall wird eine sehr effektive Glättung erreicht; im zweiten Fall wird Voxelelementen mit einer Mehrzahl von Objektpunkten ein höheres Gewicht beigemessen.

Es versteht sich dass bei einer schwenkbaren Kameraeinrichtung der Schwenkwinkel jeweils bekannt ist, sodaß alle Bildpunkte des Objekts in einem einzigen, kamerafesten Koordinatensystem angegeben werden, dessen Achse $g_1$ beispielsweise die optische Achse der Kamera im nicht verschwenkten Zustand ist. Es kann vorteilhaft sein, im kamerafesten Koordinatensystem zunächst mit Polarkoordinaten zu arbeiten, und diese vor der Transformation in das fahrzeugfeste Koordinatensystem in kartesische, kamerafeste Koordinaten umzurechnen.

**Patentansprüche**

1. Verfahren zum Bestimmen der Belegung des Innenraums eines Fahrzeugs,
enthaltend folgende Schritte:

   - Aufnehmen eines dreidimensionalen Oberflächenbildes eines Bereiches des Fahrzeuginnenraums mit Hilfe einer Aufnahmeeinrichtung,
   - Erzeugen von Aufnahmebilddaten, die Bildpunkten des Oberflächenbildes entsprechende Objektpunkte in einem Aufnahmekoordinatensystem der Aufnahmeeinrichtung darstellen, und
   - Umwandeln der Aufnahmebilddaten in Fahrzeugbilddaten, die die den Bildpunkten entsprechenden Objektpunkte als Vektoren in einem fahrzeugfesten Koordinatensystem beschreiben,
   - Auswerten der Fahrzeugbilddaten, ob vorbestimmte Bedingungen vorhanden sind zur Bestimmung der Belegung,

   wobei
   der von der Aufnahmeeinrichtung erfasste Bereich in Volumenelemente zerlegt wird,
   denjenigen Volumenelementen, in denen keine Fahrzeugbilddaten liegen, ein erster, vorbestimmter Wert zugeordnet wird,
   denjenigen Volumenelementen, in denen Fahrzeugbilddaten wenigstens eines Bildpunktes liegen, ein zweiter, vorbestimmter Wert zugeordnet wird und
   die so erhaltenen Volumenelementbilddaten für die weitere Auswertung herangezogen werden.

2. Verfahren nach Anspruch 1, wobei eine Umwandlungsmatrix zum Umwandeln der Aufnahmebilddaten in Fahrzeugbilddaten unter Verwendung von Aufnahmebilddaten vorbestimmter Bezugsobjektpunkte ermittelt wird, deren Lage im fahrzeugfesten Koordinatensystem bekannt ist.

3. Verfahren nach Anspruch 1 oder 2, wobei eine Umwandlungsmatrix zum Umwandeln der Aufnahmebilddaten in Fahrzeugbilddaten bei einer Abweichung der vorbekannten Koordinaten der fahrzeugfesten Bezugsobjektpunkte von den aus deren Aufnahmebilddaten erzeugten Fahrzeugbilddaten optimiert wird, indem nach der Methode der kleinsten Fehlerquadrate die quadratische Abweichung minimiert wird.

4. Verfahren nach einem der Ansprüche 1 bis 3, wobei das Aufnahmekoordinatensystem und das fahrzeugfeste Koordinatensystemsystem kartesische Koordinatensysteme sind.

5. System zur Bestimmung der Belegung des Innenraums eines Fahrzeugs, enthaltend
eine in einem Fahrzeuginnenraum montierte Aufnahmeeinrichtung (10) zum Aufnehmen eines Bereiches des Fahrzeuginnenraums,
eine Aufnahmebilddatenerzeugungseinheit (14) zum Erzeugen von Aufnahmebilddaten, in denen jeder aufgenommene Bildpunkt eines dreidimensionalen Oberflächenbildes als Vektor in einem Aufnahmekoordinatensystem der Aufnahmeeinrichtung dargestellt ist, und
eine Umwandlungseinheit (16), die die Aufnahmebilddaten in Fahrzeugbilddaten umwandelt, wobei die Fahrzeugbilddaten jeden Bildpunkt als Vektor in einem fahrzeugfesten Koordinatensystem beschreiben und
eine Auswerteinheit (20, die die Fahrzeugbilddaten im Hinblick auf vorbestimmte Kriterien auswertet und ein Steuersignal für eine Steuereinheit (26) einer Insassenschutzeinrichtung (28) erzeugt,
eine Voxeleinrichtung (18), die den Fahrzeuginnenraum in Volumenelemente zerlegt, denjenigen Volumenelementen, in denen keine Fahrzeugbilddaten liegen, einen ersten, vorbestimmten Wert zuordnet und denjenigen Volumenelementen, in denen Fahrzeugbilddaten wenigstens eines Bildpunktes liegen, einen zweiten, vorbestimmter Wert zuordnet,
sodass einem dreidimensionales Voxelbild entsprechende Voxelbilddaten erzeugt werden, die von der Oberfläche eines Objekts belegte und nicht belegte Volumenelemente kennzeichnen.

6. System nach Anspruch 5, enthaltend

eine Auswerteinheit (20, die die Voxelbilddaten im Hinblick auf vorbestimmte Kriterien auswertet und Steuersignal für eine Steuereinheit (26) einer Insassenschutzeinrichtung (28) erzeugt.

## Claims

1. Method for determining whether the interior of a vehicle is occupied, including the following stages:

   - acquisition of a three-dimensional surface image of an area of the vehicle interior using an image acquisition means,
   - generation of image acquisition data depicting object points corresponding to image points of the surface image in an image acquisition coordinate system of the image acquisition means and
   - conversion of the image acquisition data to vehicle image data, which describe the object points corresponding to the image points as vectors in a vehicle-specific coordinate system.
   - evaluation of the vehicle image data to determine whether predetermined conditions are available to determine the occupancy,

   with the area detected by the image acquisition means being broken down into volume elements,
   to which volume elements, within which there is no vehicle image data, a first, predetermined value is assigned,
   to which volume elements, within which there is vehicle image data of at least one image point, a second, predetermined value is assigned,
   with the resulting volume element image data being used for the further analysis.

2. Method according to claim 1, with a conversion matrix being determined to convert the image acquisition data to vehicle image data using image acquisition data for predetermined reference object points, the position of which is known in the vehicle-specific coordinate system.

3. Method according to claim 1 or 2, with a conversion matrix being optimised to convert the image acquisition data to vehicle image data in the event of a discrepancy between the already known coordinates of the vehicle-specific reference object points and the vehicle image data generated from their image acquisition data, by minimising the quadratic discrepancy according to the smallest error square method.

4. Method according to one of claims 1 to 3, with the image acquisition coordinate system and the vehicle-specific coordinate system being Cartesian coordinate systems.

5. System for determining whether the interior of a vehicle is occupied, containing
   an image acquisition means (10) fitted in the interior of a vehicle to acquire an area of the vehicle interior,
   an image acquisition data generation unit (14) to generate image acquisition data, in which every acquired image point of a three-dimensional surface image is depicted as a vector in an image acquisition coordinate system of the image acquisition means, and
   a conversion unit (16), which converts the image acquisition data to vehicle image data, with the vehicle image data depicting every image point as a vector in a vehicle-specific coordinate system and,
   an evaluation unit (20), which evaluates the vehicle image data in respect of predetermined criteria and a control signal for a control unit (26) of an occupant protection system (28),
   a voxel unit (18), which breaks down the vehicle interior into volume elements, assigning a first, predetermined value to those volume elements, within which there is no vehicle image data and assigning a second, predetermined value to those volume elements, within which there is vehicle image data of at least one image point,
   so that voxel image data corresponding to a three-dimensional voxel image is generated, which characterises occupied and unoccupied volume elements of the surface of an object.

6. System according to claim 5,
   containing an analysis unit (20), which analyses the vehicle image data or voxel image data in respect of predetermined criteria and generates control signals for a control unit (26) of an occupant protection system (28).

**Revendications**

1. Procédé permettant de déterminer l'occupation de l'habitacle d'un véhicule,
comprenant les étapes suivantes :

   - acquisition d'une image de surface tridimensionnelle d'une zone de l'habitacle du véhicule à l'aide d'un dispositif d'acquisition d'images,
   - génération de données d'image d'acquisition qui représentent, dans un système de coordonnées d'acquisition du dispositif d'acquisition d'images, les points d'objet correspondant aux points d'image de l'image de surface, et
   - conversion des données d'image d'acquisition en données d'image de véhicule, lesquelles décrivent les points d'objet correspondant aux points d'image en tant que vecteurs dans un système de coordonnées lié au véhicule,
   - évaluation des données d'image de véhicule afin de savoir s'il existe des conditions préalablement définies, en vue de déterminer l'occupation,

   la zone saisie par le dispositif d'acquisition d'images étant subdivisée en volumes élémentaires,
   une première valeur préalablement définie étant attribuée aux volumes élémentaires dans lesquels ne se trouvent pas de données d'image de véhicule,
   une deuxième valeur préalablement définie étant attribuée aux volumes élémentaires dans lesquels se situent des données d'image de véhicule d'au moins un point d'image,
   les données d'image de volumes élémentaires ainsi obtenues étant utilisées pour l'évaluation ultérieure.

2. Procédé selon la revendication 1, une matrice de conversion permettant de convertir les données d'image d'acquisition en données d'image de véhicule étant déterminée en utilisant des données d'image d'acquisition de points d'objets de référence dont la position dans le système de coordonnées lié au véhicule est connue.

3. Procédé selon la revendication 1 ou 2, une matrice de conversion permettant de convertir des données d'image d'acquisition en données d'image de véhicule étant optimisée en cas d'écart entre les coordonnées préalablement connues des points d'objet de référence liés au véhicule et les données d'image de véhicule générées à partir des données d'image d'acquisition de ceux-ci en ce que l'écart quadratique est réduit selon la méthode des moindres carrés des erreurs.

4. Procédé selon l'une des revendications 1 à 3, le système de coordonnées d'acquisition et le système de coordonnées lié au véhicule étant des systèmes de coordonnées cartésiennes.

5. Système permettant de déterminer l'occupation de l'habitacle d'un véhicule, comprenant
un dispositif d'acquisition d'images (10) monté dans un habitacle de véhicule et permettant d'acquérir des images d'une zone de l'habitacle du véhicule, une unité génératrice de données d'image d'acquisition (14) permettant de générer des données d'image d'acquisition dans lesquelles chaque point d'image acquis d'une image de surface tridimensionnelle est représenté en tant que vecteur dans un système de coordonnées d'acquisition du dispositif d'acquisition d'images, et
une unité de conversion (16) qui convertit les données d'image d'acquisition en données d'image de véhicule, les données d'image de véhicule décrivant chaque point d'image en tant que vecteur dans un système de coordonnées lié au véhicule et
une unité d'évaluation (20) qui évalue les données d'image de véhicule en vue de critères préalablement définis et génère un signal de commande pour une unité de commande (26) d'un dispositif de protection des occupants (28), un dispositif voxel (18) qui subdivise l'habitable du véhicule en volumes élémentaires, attribue une première valeur préalablement définie aux volumes élémentaires dans lesquels ne se situent pas de données d'image de véhicule et une deuxième valeur préalablement définie aux volumes élémentaires dans lesquels se situent des données d'image de véhicule d'au moins un point d'image,
de sorte à générer des données d'image voxel correspondant à une image voxel tridimensionnelle, lesquelles caractérisent des volumes élémentaires occupés ou non-occupés par la surface d'un objet.

6. Système selon la revendication 5, comprenant une unité d'évaluation (20) qui évalue les données d'image voxel en vue de critères préalablement définis et qui génère des signaux de commande pour une unité de commande (26) d'un dispositif de protection des occupants (28).

FIG 1

FIG 2

# FIG 3